# EUROPEAN PATENT SPECIFICATION

(11) **EP 1 077 328 B1**
(45) Date of publication and mention of the grant of the patent: **19.03.2003**
(21) Application number: 00117015.8
(22) Date of filing: 08.08.2000
(51) Int. Cl.: F02N 11/08

(54) **Intelligent automatic stoppage and restart of motor vehicle engine**
Intelligente automatische Stop-Startvorichtung eines Kraftfahrzeugs
Dispositif d'arrêt et de redémarrage automatique intelligent de véhicule

(30) Priority: 16.08.1999 JP 22967099
(43) Date of publication of application: 21.02.2001
(73) Proprietor: NISSAN MOTOR COMPANY, LIMITED, Yokohama-shi, Kanagawa 221-0023 (JP)
(72) Inventor: Uchida, Masaaki, Yokosuka-shi, Kanagawa 237-0066 (JP); Nakajima, Yuki, Yokohama-shi, Kanagawa 236-0057 (JP)
(74) Representative: Weber, Joachim, Dr.

(56) References cited:
- DE-A- 19 600 734
- PATENT ABSTRACTS OF JAPAN vol. 017, no. 263 (M-1415), 24 May 1993 (1993-05-24) & JP 05 001592 A (SUZUKI MOTOR CORP), 8 January 1993 (1993-01-08)
- PATENT ABSTRACTS OF JAPAN vol. 1997, no. 10, 31 October 1997 (1997-10-31) & JP 09 144587 A (DENSO CORP), 3 June 1997 (1997-06-03)
- PATENT ABSTRACTS OF JAPAN vol. 1997, no. 03, 31 March 1997 (1997-03-31) & JP 08 291725 A (HINO MOTORS LTD), 5 November 1996 (1996-11-05)

## Description

### FIELD OF THE INVENTION

The present invention relates to the control of an internal combustion engine of a motor vehicle under special conditions of operation. More particularly, the present invention relates to a method and an apparatus for stopping and restarting the operation of the engine.

### BACKGROUND OF THE INVENTION

Known in the art is an apparatus for arresting a motor vehicle internal combustion engine for the purpose of fuel conservation and reduction of toxic emissions.

JP-A 8-291725 discloses an apparatus for performing engine shut-off and restart. According to this known apparatus, when a driver depresses a brake pedal and places a manual select lever of an automatic transmission at neutral position under condition of standstill, a controller stops operation of the engine. Subsequently, if the driver places the select lever at drive position with the brake pedal being depressed, the controller restarts the engine.

The known apparatus fails to include provisions, which prevent repeated engine stoppage at very low vehicle speeds, so that it causes engine stoppage when, in combined city and highway use including bumper-to-bumper traffic, it is counter to the driver's desire. Repeated engine stoppage and restart cause a considerable reduction in the charging level of the vehicle battery.

JP-A 5-1592 which is considered to represent the closest prior art, discloses an automatic engine stoppage apparatus implementing technique to suppress repeated engine stoppage and restart in bumper-to-bumper traffic. According to this technique, there is an interrogation that vehicle speeds above a predetermined vehicle speed V km/h have been maintained for a predetermined period of time t4. This interrogation is made after performing restart of engine prior to checking if conditions for shutting off the engine are met.

This known apparatus is still not satisfactory for a sensitive adaptation to prevailing conditions of the vehicle and in particular tends to shut off the engines when this is counter to the driver's desires or fails to shut off the engine under conditions where it would be justifiable to do so. For example, the above-mentioned condition may not be met if, after it has come to standstill, a vehicle moves off for a few meters at a very low speed toward the preceding vehicle that had stopped in front of a traffic light. Then, the engine will not be stopped automatically upon coming to standstill again at bumper-to-bumper spaced relation to the preceding vehicle.

### SUMMARY OF THE INVENTION

An object of the present invention is to provide a method and controller for automatic stoppage and restart of an internal combustion engine of a motor vehicle, which is not subject to the abovementioned characteristics of the previously known methods and controllers.

An associated object of the present invention is to provide a method and a controller, which prohibits repeated automatic stoppage and restart of a motor vehicle engine to avoid a considerable reduction in the charging level of the vehicle battery under prevailing conditions in combined city and highway use including bumper-to-bumper traffic.

This is achieved with a controller, according to the features of claims 1 and 2 and with a method, according to the features of claims 6 and 7.

### BRIEF DESCRIPTION OF THE DRAWINGS

Figure 1 is a schematic view of a vehicle drivetrain employing an intelligent automatic stoppage and restart of a motor vehicle engine implementing the present invention.

Figure 2 shows various hardware configurations of a vehicle navigation system in combination with the intelligent automatic stoppage and restart of the motor vehicle engine.

Figure 3 is a flow chart of a control routine implementing the present invention.

Figure 4 is a flow chart of a control routine illustrating the first preferred implementation.

Figure 5 is a flow chart of a control routine illustrating the second preferred implementation.

Figure 6 is a flow chart of a control routine illustrating the second preferred implementation.

### DESCRIPTION OF THE PREFERRED EMBODIMENTS

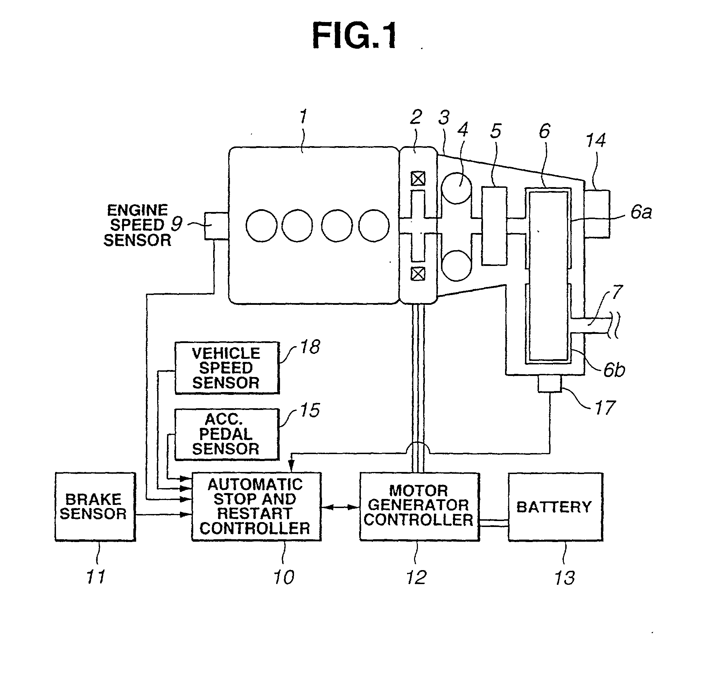

In Figure 1, a drivetrain for an automobile includes an internal combustion engine 1 and a continuously variable transmission (CVT) 3. The reference numeral 2 designates a motor generator. In this illustrated example, motor generator 2 is disposed between engine 1 and CVT 3. In this drivetrain, engine 1 or motor generator 2 produces drive fed to CVT 3. CVT 3 transmits the drive to a drive shaft 7, which in turn drives the vehicle road wheels, not shown.

The drivetrain is not limited to the illustrated example shown in Figure 1. For example, engine 1 may be any heat engine such as a gasoline engine and a Diesel engine. CVT 3 is only an example of a transmission that can be used in the drivetrain. For example, an ordinary automatic transmission that has plural discrete gear ratios and a torque converter may replace CVT 3. CVT 3 shown in Figure 1 is of the so-called belt and pulley type. Other types of CVT including a CVT of the so-called conical cone type may be used.

CVT 3, in this example, has a torque converter 4, a forward and reverse changeover gearing 5, and a pulley unit that includes a belt 6 extending between a driver pulley 6a and a follower pulley 6b. As a source of hydraulic fluid, an oil pump 14 is provided. Engine 1 does not drive pump 14. Instead, pump 14 includes an electric motor that is supplied with electric current always or when need arises. As is well known, a pulley ratio between speed of driver pulley 6a and speed of follower pulley 6b is variable. Varying the pulley ratio alters a CVT ratio, that is, a speed ratio between CVT input shaft speed and CVT output shaft speed. A transmission controller, not shown, determines a target value of an operating parameter, which is variable with CVT ratio, against varying traveling conditions of a vehicle. The transmission controller can adjust primary pressure and secondary pressure applied to driver and follower pulleys 6a and 6b, respectively, to vary CVT ratio in such a direction as to reduce a deviation of current value of the operating parameter from the target value. Pump 14 driven by electric motor provides hydraulic pressure needed by CVT 3.

Forward reverse gearing 5 provides a switch between forward travel and reverse travel. Torque converter 4 provides torque multiplication between its pump side and turbine side.

Motor generator 2 has a rotor that is coupled directly or via a belt or a chain drive to a crankshaft of engine 1. A motor generator controller 12 is provided to render motor generator 2 operable as a motor or as a generator. It also controls speed of motor generator 2 and torque or electric power.

Motor generator 2 operates as a motor when more power is needed or when engine 1 is to be started. Motor generator controller 12 operates motor generator 2 as a motor by regulating supply of electric current thereto from a vehicle battery 13. In regenerative mode, motor generator controller 12 operates motor generator 2 as a generator by regulating supply of electric current from motor generator 2 to charge battery 13.

An automatic stop and restart controller 10 is provided. Controller 10 controls automatic stoppage and restart of the engine 1 upon predetermined conditions being met after the vehicle has come to standstill.

Sensors are provided for controller 10 to determine appropriate timings of automatic stoppage and restart of engine 1. The sensors include an engine speed sensor 9, a brake sensor 11, an accelerator pedal (or gas pedal) sensor 15, a shift position sensor 17 and a vehicle speed sensor 18. The vehicle speed sensor 18 detects an operating parameter indicative of traveling speed of the vehicle and generates a vehicle speed signal indicative of the traveling speed. CVT 3 has plural drive positions, i.e., Park, Reverse, Neutral and Drive. Shift position sensor 17 is in the form of an inhibitor switch of CVT 3 and generates a drive position signal indicative of a current drive position. Accelerator pedal sensor 15 detects depression degree of an accelerator pedal and generates a depression degree signal indicative of the detected depression degree. Brake sensor 15 detects whether or not a brake pedal is depressed and generates a brake signal. Engine speed sensor 9 detects an operating parameter indicative of revolution speed of engine 1 and generates an engine speed signal indicative of the engine speed. The sensor signals are fed to controller 10.

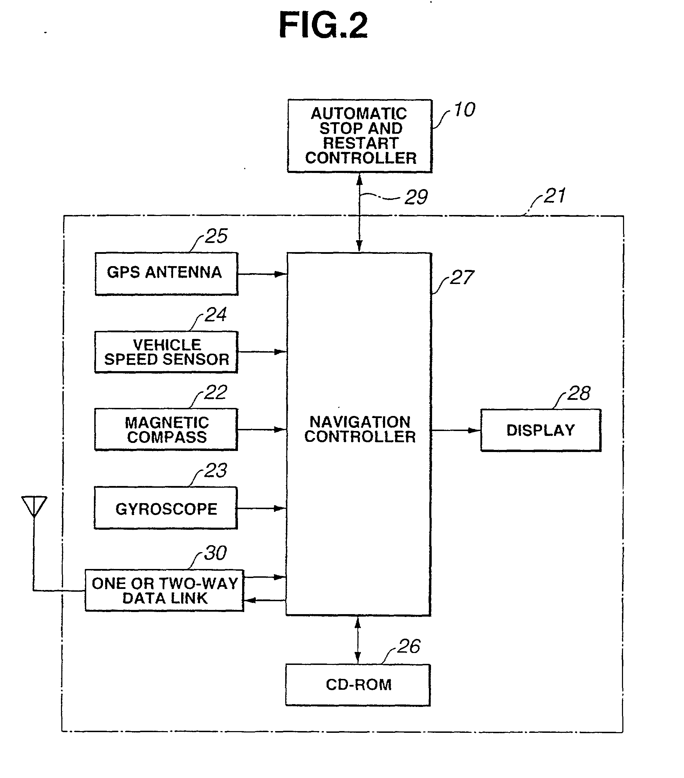

The vehicle has a navigation system 21. Referring to Figure 2, navigation system 21 includes a magnetic compass 22 as a vehicle orientation sensor, a gyroscope 23 to measure an angular rate, a vehicle speed sensor 24 that may or may not be identical with the vehicle speed sensor 18, a GPS (Global Positioning System) antenna 25, a map database 26 stored in CD-ROM, a navigation control unit 27, a one or two way data or communication link 30 and a user interface that includes a display 28. Control unit 27 inputs information from the sensors and determines a vehicle current position and also inputs information through communication link 30 to determine where bumper-to-bumper traffic exists. The determined vehicle current position and heading are indicated on a map within the display 28. The determined bumper-to-bumper traffic is indicated on a road or roads on the map as a congested road.

In the present implementation of the present invention, navigation system 21 is put into operation by turning on engine ignition key, not shown, and it keeps on operating until the engine ignition key is subsequently turned off. Navigation system 21 keeps on calculating a vehicle current position and updating information as to bumper-to-bumper traffic for use in controller 10. A communication line 29 interconnects the navigation system 21 and controller 10. Through the communication line 29, controller 10 can access into navigation system 21 to input information on the vehicle current position and on congested road.

In order to prevent repeated stoppage and restart of engine 1, controller 10 prohibits automatic stoppage of engine 1 when the vehicle comes to standstill in bumper-to-bumper traffic on a congested roadway or immediately after leaving a congested roadway. Controller 10 relies on information from navigation system 21 and has logic to determine whether or not the vehicle is on a congested roadway. This logic is also used to determine whether or not the vehicle has just left a congested roadway.

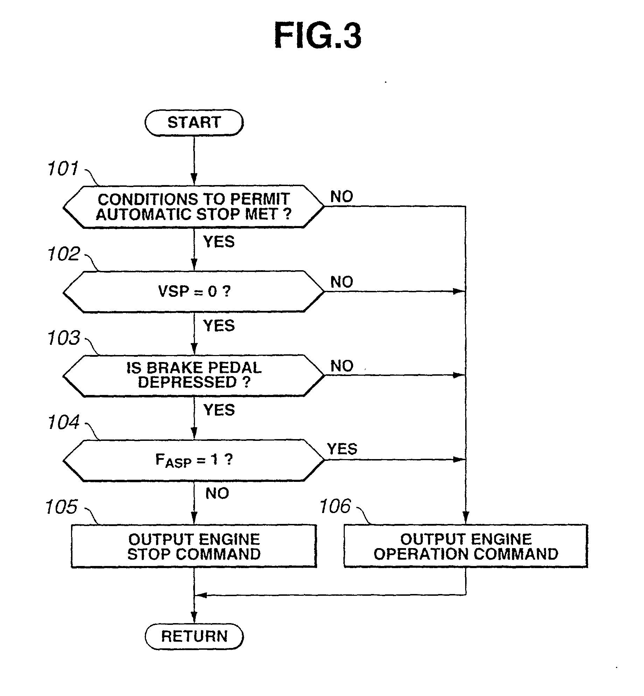

The flow chart of Figure 3 illustrates a control routine for conducting automatic stoppage and restart of engine 1 implementing the invention. Controller 10 executes this control routine at regular intervals, for example, 10 milliseconds. Controller 10 includes in the usual manner an input/output (I/O) interface, a read only memory (ROM), a random access memory (RAM) and a central processor unit (CPU). A data bus interconnects these components. The ROM stores control programs prepared along the flow chart of Figure 3.

In Figure 3, at step 101, the CPU of controller 10 determines whether or not predetermined conditions to permit automatic stoppage of engine 1, i.e., idle stop, are met.

The predetermined conditions include,
① State of charge (SOC) of a vehicle battery falls in a predetermined range, and
② Engine coolant temperature falls in a predetermined engine indicating that engine warming-up has been completed.

If, at step 101, the CPU determines that both of the above two conditions are met, the control routine proceeds to step 102. At step 102, the CPU determines whether or not vehicle speed VSP is zero (= 0 km/h). If this is the case, the control routine proceeds to step 103. At step 103, the CPU determines whether or not brake pedal is depressed by checking on the brake signal from the brake pedal sensor 11. If this is the case, the control routine proceeds to step 104.

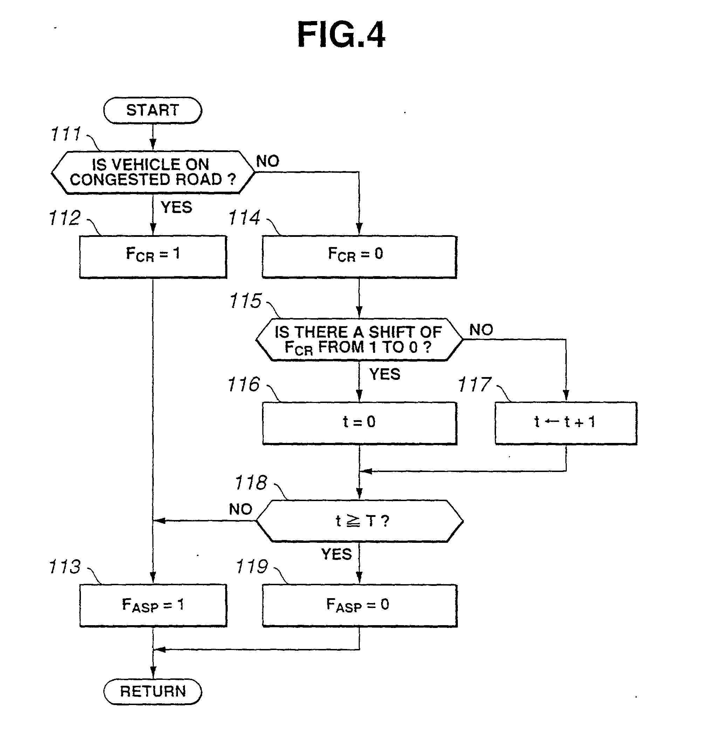

At step 104, the CPU determines whether an automatic stop prohibit (ASP) flag F_{ASP} is set (= 1) or reset (= 0). As will be later described along the flow chart of Figure 4, ASP flag F_{ASP} is set when the CPU determines that a vehicle is on a congested roadway or the vehicle has just left a congested roadway. That is, when ASP flag F_{ASP} = 1, the routine proceeds to step 106 for prohibiting automatic stoppage of engine 1. At step 106, the CPU outputs an engine operation command to permit operation of engine 1.

If, at step 104, ASP flag F_{ASP} = 0, the routine proceeds to step 105 for conducting automatic stoppage of engine 1. At step 105, the CPU outputs an engine stop command.

If, at step 101, all of the predetermined conditions are not met, the routine proceeds to step 106. If, at step 102, the vehicle speed VSP is not zero, the routine proceeds to step 106. If, at step 102, the brake pedal is not depressed, the routine proceeds to step 106. At step 106, the CPU outputs engine operation command. For restarting engine 1, automatic stop and restart controller 10 provides an engine restart command to motor generator controller 12, operating motor generator 2 as a motor to start engine 1.

The flow chart of Figure 4 illustrates a control routine implementing the present invention. The CPU executes this control routine at regular intervals, for example, 10 milliseconds. The control routine includes logic to determine whether or not a vehicle is on a congested roadway and whether or not the vehicle has just left a congested roadway.

At step 111, the CPU inputs information on vehicle current position and information on traffic from navigation control unit 27 and determines whether or not a vehicle is on a congested roadway. If this is the case, the routine proceeds to step 112 and then to step 113. At step 112, the CPU sets a congested roadway (CR) flag F_{CR} (F_{CR} = 1). At step 113, the CPU sets ASP flag F_{ASP} (F_{ASP} = 1). Both of the flags F_{CR} and F_{ASP} are initially reset and thus equal to zero, respectively.

If, at step 111, the CPU determines that the vehicle is not on a congested roadway, the routine proceeds to step 114. At step 114, the CPU resets CR flag F_{CR}. Immediately after the moment when there is a shift of CR flag F_{CR} from 1 to 0, the CPU starts measuring time elapsed from the moment (steps 115 to 117). This moment represents when a vehicle has just left a congested roadway. At step 115, the CPU determines whether or not there is a shift of CR flag F_{CR} from 1 to 0 by comparing the current 0 level of CR flag F_{CR} with the previous level thereof. If this is the case, the routine proceeds to step 116. At step 116, the CPU sets a timer t ready for action (t = 0). If, at step 114, the current 0 level of CR flag F_{CR} is equal to the previous level thereof, the routine proceeds to step 117. At step 117, the CPU performs increment of the timer t by one.

After step 116 or 117, the routine proceeds to step 118. At step 118, the CPU determines whether or not the timer t is greater than a predetermined value T. The predetermined value T represents a period of time on which a decision is made whether or not the vehicle has left a congested roadway. In this example, the predetermined value represents 1 minute. If, at step 118, t < T, the routine proceeds to step 113. At step 113, the CPU sets ASP flag F_{ASP} (F_{ASP} = 1).

If, at step 118, t ≧ T, the routine proceeds to step 119 where the CPU resets ASP flag F_{ASP} (F_{ASP} = 0).

The preceding description clearly indicates that ASP flag F_{ASP} allows engine to keep on idling when vehicle comes to stationary on a congested roadway or immediately after the vehicle has left a congested roadway.

The preferred implementation has used information on current vehicle position and information on traffic from navigation system 21, thus making it easy to prohibit automatic stoppage of engine 1 when vehicle is on a congested roadway or immediately after vehicle has left a congested roadway.

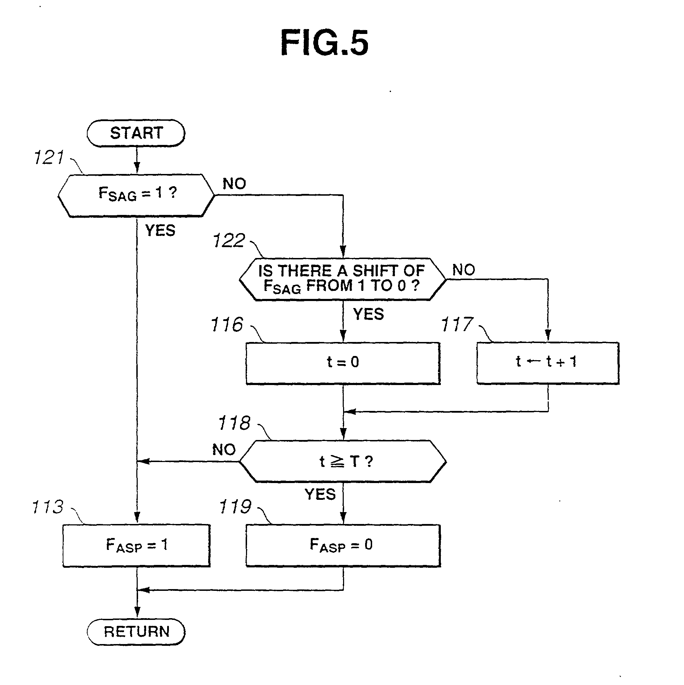

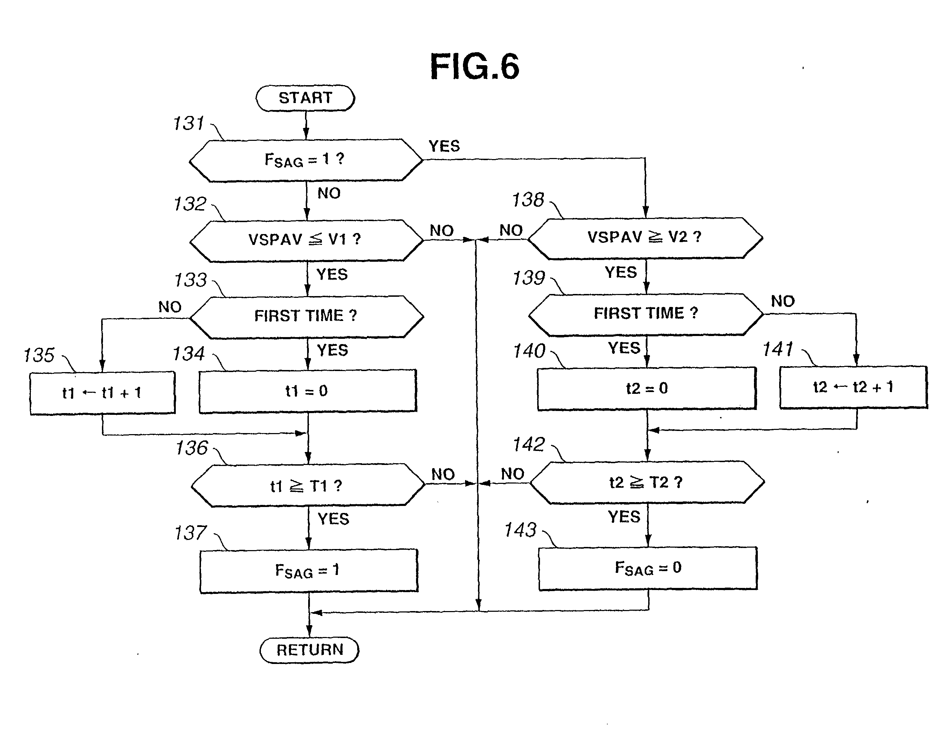

Referring to Figures 5 and 6, description on a second preferred implementation of the present invention is made. This second implementation is substantially the same as the first implementation, but a stop-and-go (SAG) flag F_{SAG} is used in the place of CR flag F_{CR} in determining ASP flag F_{ASP}. The flow chart of Figure 5 illustrates a control routine implementing the present invention. The CPU executes this control routine at regular intervals, for example, 10 milliseconds, to determine ASP flag F_{ASP}. The flow chart of Figure 6 illustrates a control routine implementing the present invention. The CPU executes this control routine at regular intervals, for example, 10 milliseconds, to determine SAG flag F_{SAG}. Accordingly, the second preferred implementation is different from the first preferred implementation in that the control routines of Figures 5 and 6 have replaced the control routine of Figure 4.

The same reference numerals are used throughout Figures 4 and 5 to designate like steps to facilitate understanding of similarity between them.

In Figure 5, at step 121, the CPU determines whether or not SAG flag F_{SAG} is set (F_{SAG} = 1). If this is the case, the routine proceeds to step 113. At step 113, the CPU sets ASP flag F_{ASP}. If, at step 121, SAG flag F_{SAG} is reset (F_{SAG} = 0), the routine proceeds to step 122. At step 122, the CPU determines whether or not there is a shift of SAG flag F_{SAG} from 1 to 0 by comparing the current 0 level of SAG flag F_{SAG} with the previous level thereof. If this is the case, the routine proceeds to step 116. At step 116, the CPU sets a timer t ready for action (t = 0). If, at step 122, the current 0 level of SAG flag F_{SAG} is equal to the previous level thereof, the routine proceeds to step 117. At step 117, the CPU performs increment of the timer t by one.

After step 116 or 117, the routine proceeds to step 118. At step 118, the CPU determines whether or not the timer t is greater than or equal to a predetermined value T. In this example, the predetermined value represents 1 minute. If, at step 118, t < T, the routine proceeds to step 113. At step 113, the CPU sets ASP flag F_{ASP} (F_{ASP} = 1).

If, at step 118, t ≧ T, the routine proceeds to step 119 where the CPU resets ASP flag F_{ASP} (F_{ASP} = 0).

The flow chart of Figure 6 illustrates how to determine SAG flag F_{SAG}.

The first preferred implementation is operable on information from vehicle navigation system 21. According to the second preferred implementation, the estimation whether or not a vehicle is in bumper-to-bumper traffic is made on information derived from vehicle speed sensor 18 (see Figure 1). Thus, the second preferred implementation does not require a navigation system and finds its application to vehicles that are not equipped with a navigation system.

In Figure 6, at step 131, the CPU determines whether or not SAG flag F_{SAG} is set (F_{SAG} = 1). If, at step 131, F_{SAG} = 0, the routine proceeds to step 132 and onwards. At step 132, the CPU determines whether or not an average vehicle speed VSPAV is less than or equal to a first predetermined vehicle speed value V1 (VSPAV ≦ V1). The first predetermined vehicle speed value V1 represents a vehicle speed, for example, 10 km/h, which is not to be exceeded when vehicle is in bumper-to-bumper traffic. If, at step 132, VSPAV > V1, the routine comes to an end point, thus leaving SAG flag F_{SAG} as it is (F_{SAG} = 0).

If, at step 132, the CPU determines that VSPAV ≦ V1, the routine proceeds to step 133. At step 133, the CPU determines whether or not the current determination at step 132 that VSPAV ≦ V1 is the first time by comparing the current determination at step 132 with the previous determination at step 132. If, at step 133, the current determination is the first time, the routine proceeds to step 134. At step 134, the CPU sets a first timer t1 ready for action (t1 = 0). If, at step 133, the current determination is not the first time and thus the second time and onwards, the routine proceeds to step 135. At step 135, the CPU performs increment of the first timer t1 by one.

After step 134 or 135, the routine proceeds to step 136. At step 136, the CPU determines whether or not the first timer t1 is greater than or equal to a predetermined value T1 (t1 ≧ T1). The predetermined value T1 represents a period of time, for example, 5 minutes, which is considered to be sufficiently long after the moment when the determination that VSPAV ≦ V1 was made at the first time to determine that vehicle is traveling at high speeds. If, at step 136, t1 ≧ T1, the routine proceeds to step 137 because this is the case when vehicle is traveling at high speeds. At step 137, the CPU sets the high speed travelling flag F_{HST} (F_{HST} = 1).

If, at step 136, t1 < T1, the routine proceeds to the end point, leaving SAG flag F_{SAG} as it is (F_{SAG} = 0). This means that SAG flag F_{SAG} stays at the level of 0 as long as t1 is shorter than T1 after the moment when the determination that VSPAV ≦ V1 was made at the first time.

If, at step 131, F_{SAG} = 1, the routine proceeds to step 138 and onwards. At step 138, the CPU determines whether or not average vehicle speed VSPAV is greater than or equal to a second predetermined vehicle speed value V2 (VSPAV ≧ V2). The second predetermined vehicle speed value V2 represents a vehicle speed, for example, 30 km/h, which is to be exceeded when a vehicle has left bumper-to-bumper traffic. If, at step 138, VSPAV < V2, the routine comes to an end point, thus leaving the flag F_{SAG} as it is (F_{SAG} = 1).

If, at step 138, the CPU determines that VSPAV ≧ V2, the routine proceeds to step 139. At step 139, the CPU determines whether or not the current determination at step 138 that VSPAV ≧ V2 is the first time by comparing the current determination at step 138 with the previous determination at step 138. If, at step 139, the current determination is the first time, the routine proceeds to step 140. At step 140, the CPU sets a second timer t2 ready for action (t2 = 0). If, at step 139, the current determination is not the first time and thus the second time and onwards, the routine proceeds to step 141. At step 141, the CPU performs increment of the second timer t2 by one.

After step 140 or 141, the routine proceeds to step 142. At step 142, the CPU determines whether or not the second timer t2 is greater than or equal to a predetermined value T2 (t2 ≧ T2). The predetermined value T2 represents a period of time, for example, 1 minute, which is considered to be sufficiently long after the moment when the determination that VSPAV ≧ V2 was made at the first time to determine that vehicle has left bumper-to-bumper traffic. If, at step 142, t2 ≧ T2, the routine proceeds to step 143. At step 143, the CPU resets SAG flag F_{SAG} (F_{SAG} = 0).

If, at step 142, t2 < T2, the routine proceeds to the end point, leaving SAG flag F_{SAG} as it is (F_{SAG} = 1). This means that SAG flag F_{SAG} stays at the level of 1 as long as t2 is shorter than T2 after the moment when the determination that VSPAV ≧ V2 was made at the first time.

The average vehicle speed VSPAV can be given by calculating weighted average or simple average of vehicle speed VSP indicated by the vehicle speed signal generated by vehicle speed sensor 18. The use of such average of vehicle speed is advantageous in removing effect of instantaneous acceleration/deceleration upon evaluating whether or not a vehicle is in bumper-to-bumper traffic.

Let us now assume that the vehicle keeps on travelling at average speed VSPAV that is less than V1 for a period of time longer T1. In this case, the vehicle is in bumper-to-bumper traffic, so that SAG flag F_{SAG} is equal to 1 (F_{SAG} = 1). Under this condition, if a brake pedal is applied to bring the vehicle to stationary, the average vehicle speed VSPAV drops to 0 (km/h). SAG flag F_{SAG} is equal to 1, prohibiting the automatic stoppage of engine 1. Accordingly, repeated automatic stoppage and restart will not take place while the vehicle is in bumper-to-bumper traffic because SAG flag F_{SAG} is equal to 1. In this manner, a considerable reduction in charging level of vehicle battery is prevented.

Let us consider the case where a vehicle can speed up for a relatively short period of time while traveling in bumper-to-bumper traffic. This is the case where the average vehicle speed VSPAV exceeds V2 for a period of time shorter than T2. Accordingly, SAG flag F_{SAG} remains equal to 1, prohibiting automatic stoppage of engine for vehicle battery energy conservation.

Let us next consider the case where a vehicle comes to a standstill in normal traffic and moves off again for traveling in normal traffic. This is the case where the average speed VSPAV drops below V1 for a period of time shorter than T1. Accordingly, flag F_{SAG} remains equal to 0, allowing automatic stoppage and restart of engine for fuel conservation and reduction in toxic emissions.

In the preferred implementations, T represented 1 minute, T1 represented 5 minutes, V1 represented 10 km/h, T2 represented 1 minute, and V2 represented 30 km/h. These predetermined values are subject to variations in accordance with types of engine and types of vehicle. Appropriate values to such predetermined values can be determined by matching.

In the first preferred implementation, the present invention is implemented with such navigation system having GPS antenna. The present invention may be implemented with other types of navigation systems, for example, a navigation system utilizing road traffic information beacon.

While the present invention has been particularly described in conjunction with the preferred implementations, it is evident that many alternatives, modifications and variations will be apparent to those skilled in the art in light of the foregoing description. It is therefore contemplated that the appended claims will embrace any such alternatives, modifications and variations as falling within the scope of the present invention.

## Claims

1. A controller (10) for automatically stopping and restarting operation of an engine (1) of a motor vehicle when the vehicle has come to a standstill, wherein the controller (10)
- determines if the motor vehicle is on a congested roadway or has just left such a traffic situation;
- and on deciding that the motor vehicle is on a congested roadway or has just left such a traffic situation, prohibits conducting automatic stoppage of the engine (1) upon coming to a standstill.

2. A controller (10) for automatically stopping and restarting operation of an engine (1) of a motor vehicle when the vehicle has come to a standstill, wherein the controller (10)
- determines if the motor vehicle is in bumper-to-bumper traffic or has just left such a traffic situation;
- and on deciding that the motor vehicle is in a bumper-to-bumper traffic or has just left such a traffic situation, prohibits conducting automatic stoppage of the engine (1) upon coming to a standstill.

3. The controller as claimed in claim 1 or 2, further comprising a navigation system (21), including a map database (26), for generating vehicle current position information and traffic information of every roadway, and wherein said controller (10) determines based on said current position information and said traffic information whether or not the vehicle is on a congested roadway.

4. The controller as claimed in claim 2, wherein said controller (10) is operative to determine that the vehicle is in bumper-to-bumper traffic after a predetermined parameter indicative of travelling speed of the vehicle has stayed less than or equal to a first predetermined value for at least a first predetermined period of time, wherein said controller (10) is operative to keep on determining that the vehicle is in bumper-to-bumper traffic after said predetermined parameter has exceeded a second predetermined value that is higher than said first predetermined value but has stayed greater than said second predetermined value for a period of time less than a second predetermined period of time if determination that the vehicle was in bumper-to-bumper traffic was made, and wherein said controller (10) is operative to determine that the vehicle is not in bumper-to-bumper traffic after said predetermined parameter has stayed less than or equal to a first predetermined value for a period of time less than said first predetermined period of time, wherein said controller (10) is operative to determine that the vehicle is not in bumper-to-bumper traffic after said predetermined parameter has stayed greater than second predetermined value for at least second predetermined period of time.

5. The controller as claimed in claim 4, wherein said predetermined parameter is the average of measures of vehicle speed.

6. A method for automatically stopping and restarting operation of an engine (1) of a motor vehicle, comprising:
- detecting a current position of the vehicle;
- providing traffic information whether or not a roadway on which the vehicle is moving is a congested roadway;
- detecting travelling speed of the vehicle;
- conducting stoppage and restart of the engine when the vehicle comes to standstill;
- determining in response to said detected current position and said provided traffic information whether or not the vehicle is on a congested roadway; and
- prohibiting conduction of said stoppage of the engine when the vehicle comes to standstill with said determination that the vehicle is on a congested roadway or has just left a congested roadway.

7. A method for automatically stopping and restarting operation of an engine (1) of a motor vehicle, comprising:
- detecting travelling speed of the vehicle;
- calculating a predetermined parameter representative of detected values of travelling speed of the vehicle;
- conducting stoppage and restart of the engine when the vehicle comes to standstill;
- determining in response to said predetermined parameter whether or not the vehicle is in bumper-to-bumper traffic; and
- prohibiting conduction of said stoppage of the engine when the vehicle comes to standstill with said determination that the vehicle is in bumper-to-bumper traffic or has just left bumper-to-bumper traffic.

## Patentansprüche

1. Steuerung (10) zum automatischen Stoppen und Wiederstarten des Betriebs eines Motors (1) eines Kraftfahrzeugs, wenn das Fahrzeug zum Stillstand gekommen ist, wobei die Steuerung (10)
- bestimmt, ob sich das Kraftfahrzeug auf einer verstopften Straße befindet oder gerade eine solche Verkehrssituation verlassen hat;
- und aufgrund der Entscheidung, dass das Kraftfahrzeug sich auf einer verstopften Straße befindet oder eine solche Verkehrssituation gerade verlassen hat, die Durchführung eines automatischen Stoppens des Motors (1) beim Erreichen eines Stillstands verhindert.

2. Steuerung (10) zum automatischen Stoppen und Wiederstarten des Betriebs eines Motors (1) eines Kraftfahrzeugs, wenn das Fahrzeug zum Stillstand gekommen ist, wobei die Steuerung (10)
- bestimmt, ob sich das Kraftfahrzeug im Stau befindet oder gerade eine solche Verkehrssituation verlassen hat;
- und aufgrund der Entscheidung, dass das Kraftfahrzeug sich im Stau befindet oder eine solche Verkehrssituation gerade verlassen hat, die Durchführung eines automatischen Stoppens des Motors (1) beim Erreichen eines Stillstands verhindert.

3. Steuerung nach Anspruch 1 oder 2, ferner umfassend ein Navigationssystem (21) mit einer Kartendatenbank (26) zum Erzeugen einer aktuellen Positionsinformation des Fahrzeugs und einer Verkehrsinformation jeder Straße, und wobei die Steuerung (10) auf Grundlage der aktuellen Positionsinformation und der Verkehrsinformation bestimmt, ob sich das Fahrzeug auf einer verstopften Straße befindet oder nicht.

4. Steuerung nach Anspruch 2, wobei die Steuerung (10) dazu dient zu bestimmen, dass sich das Fahrzeug in einem Stau befindet, nachdem ein vorbestimmter Parameter, welcher die Fahrgeschwindigkeit des Fahrzeugs anzeigt, über zumindest einen ersten vorbestimmten Zeitraum geringer oder gleich einem ersten vorbestimmten Wert geblieben ist, wobei die Steuerung (10) dazu dient weiterhin festzustellen, dass das Fahrzeug sich im Stau befindet, nachdem der vorbestimmte Parameter einen zweiten vorbestimmten Wert überschritten hat, welcher höher ist als der erste vorbestimmte Wert, aber größer geblieben ist als der zweite vorbestimmte Wert über einen Zeitraum, der kürzer ist als ein zweiter vorbestimmter Zeitraum, wenn die Bestimmung getroffen wurde, dass sich das Fahrzeug in einem Stau befindet, und wobei die Steuerung (10) dazu dient zu bestimmen, dass sich das Fahrzeug nicht in einem Stau befindet, nachdem der vorbestimmte Parameter über einen Zeitraum kürzer als der erste vorbestimmte Zeitraum geringer oder gleich einem ersten vorbestimmten Wert geblieben ist, wobei die Steuerung (10) dazu dient festzustellen, dass das Fahrzeug sich nicht in einem Stau befindet, nachdem der vorbestimmte Parameter über zumindest den zweiten vorbestimmten Zeitraum größer als der zweite vorbestimmte Wert geblieben ist.

5. Steuerung nach Anspruch 4, wobei der vorbestimmte Parameter der Durchschnitt der Messungen der Fahrzeuggeschwindigkeit ist.

6. Verfahren zum automatischen Stoppen und Wiederstarten des Betriebs eines Motors (1) eines Kraftfahrzeugs, umfassend:
- Erfassen einer aktuellen Position des Fahrzeugs;
- zur Verfügung stellen einer Verkehrsinformation, ob eine Straße, auf welcher sich das Fahrzeug bewegt, eine verstopfte Straße ist oder nicht;
- Durchführen eines Stoppens und Wiederstartens des Motors, wenn das Fahrzeug zu einem Stillstand kommt;
- in Antwort auf die erfasste aktuelle Position und die zur Verfügung gestellte Verkehrsinformation Bestimmen, ob sich das Fahrzeug auf einer verstopften Straße befindet oder nicht; und
- Verhindern der Durchführung des Stoppens des Motors, wenn das Fahrzeug zu einem Stillstand kommt, bei der Bestimmung, dass das Fahrzeug sich auf einer verstopften Straße befindet oder gerade eine verstopfte Straße verlassen hat.

7. Verfahren zum automatischen Stoppen und Wiederstarten des Betriebs eines Motors (1) eines Kraftfahrzeugs, umfassend:
- Erfassen der Fahrgeschwindigkeit des Fahrzeugs;
- Berechnen eines vorbestimmten Parameters, der die erfassten Werte der Fahrgeschwindigkeit des Fahrzeugs erkennen lässt;
- Durchführen eines Stoppens und Wiederstartens des Motors, wenn das Fahrzeug zu einem Stillstand kommt;
- in Antwort auf den vorbestimmten Parameter Bestimmen, ob sich das Fahrzeug im Stau befindet oder nicht; und
- Verhindern der Durchführung des Stoppens des Motors, wenn das Fahrzeug zu einem Stillstand kommt, bei der Bestimmung, dass das Fahrzeug sich im Stau befindet oder gerade den Stau verlassen hat.

## Revendications

1. Contrôleur (10) pour arrêter et redémarrer automatiquement le fonctionnement d'un moteur (1) d'un véhicule à moteur lorsque le véhicule est arrivé à l'arrêt, dans lequel le contrôleur (10)
- détermine si le véhicule à moteur se trouve sur une route embouteillée ou vient de quitter une telle situation de trafic ;
- et sur décision que le véhicule à moteur se trouve sur une route embouteillée ou vient de quitter une telle situation de trafic, empêche de conduire l'arrêt automatique du moteur (1) lorsque le véhicule arrive à l'arrêt.

2. Contrôleur (10) pour arrêter et redémarrer automatiquement le fonctionnement d'un moteur (1) d'un véhicule à moteur lorsque le véhicule est arrivé à l'arrêt, dans lequel le contrôleur (10)
- détermine si le véhicule à moteur se trouve dans un trafic pare-chocs contre pare-chocs ou vient de quitter une telle situation de trafic ;
- et sur décision que le véhicule à moteur se trouve dans un trafic pare-chocs contre pare-chocs ou vient de quitter une telle situation de trafic, empêche de conduire l'arrêt automatique du moteur (1) lorsque le véhicule arrive à l'arrêt.

3. Contrôleur selon la revendication 1 ou 2, comprenant, en outre, un système de navigation (21), incluant une base de données cartographiques (26), pour générer des informations de position actuelle du véhicule et des informations de trafic de chaque route, et dans lequel ledit contrôleur (10) détermine sur la base desdites informations de position actuelle et desdites informations de trafic si oui ou non le véhicule se trouve sur une route embouteillée.

4. Contrôleur selon la revendication 2, dans lequel ledit contrôleur (10) est fonctionnel pour déterminer que le véhicule se trouve dans un trafic pare-chocs contre pare-chocs après qu'un paramètre prédéterminé indicatif de la vitesse de déplacement du véhicule est demeuré inférieur ou égal à une première valeur prédéterminée pendant au moins une première période de temps prédéterminée, dans lequel ledit contrôleur (10) est fonctionnel pour continuer à déterminer que le véhicule se trouve dans un trafic pare-chocs contre pare-chocs après que ledit paramètre prédéterminée a dépassé une seconde valeur prédéterminée qui est plus grande que ladite première valeur prédéterminée mais est demeuré plus grande que ladite seconde valeur prédéterminée pendant une période de temps inférieure à une seconde période de temps prédéterminée si la détermination que le véhicule était dans un trafic pare-chocs contre pare-chocs a été effectuée, et dans lequel ledit contrôleur (10) est fonctionnel pour déterminer que le véhicule ne se trouve pas dans un trafic pare-chocs contre pare-chocs après que ledit paramètre prédéterminé est demeuré inférieur ou égal à une première valeur prédéterminée pendant une période de temps inférieure à ladite première période de temps prédéterminée, dans lequel ledit contrôleur (10) est fonctionnel pour déterminer que le véhicule n'est pas dans un trafic pare-chocs contre pare-chocs après que ledit paramètre prédéterminé est demeuré plus grand que la seconde valeur prédéterminée pendant au moins ladite seconde valeur de temps prédéterminée.

5. Contrôleur selon la revendication 4, dans lequel ledit paramètre prédéterminé est la moyenne des mesures de la vitesse du véhicule.

6. Procédé pour arrêter et redémarrer automatiquement le fonctionnement d'un moteur (1) d'un véhicule à moteur, comprenant :
- la détection d'une position actuelle du véhicule ;
- la fourniture des informations de trafic disant si oui ou non une route sur laquelle le véhicule se déplace est une route embouteillée ;
- la détection de la vitesse de déplacement du véhicule ;
- la conduite de l'arrêt et du redémarrage du moteur lorsque le véhicule arrive à l'arrêt ;
- la détermination en réponse à ladite position actuelle détectée et audites informations de trafic fournies consistant à savoir si oui ou non le véhicule se trouve sur une route embouteillée ; et
- l'empêchement de la conduction dudit arrêt du moteur lorsque le véhicule vient à l'arrêt avec ladite détermination que le véhicule se trouve sur une route embouteillée ou vient de quitter une route embouteillée.

7. Procédé pour arrêter et redémarrer automatiquement le fonctionnement d'un moteur (1) d'un véhicule à moteur, comprenant :
- la détection de la vitesse de déplacement du véhicule ;
- le calcul d'un paramètre prédéterminé représentatif des valeurs détectées de la vitesse de déplacement du véhicule ;
- la conduite de l'arrêt et du redémarrage du moteur lorsque le véhicule vient à l'arrêt ;
- la détermination en réponse audits paramètres prédéterminés consistant à savoir si oui ou non le véhicule se trouve dans un trafic pare-chocs contre pare-chocs ; et
- l'empêchement de la conduction dudit arrêt du moteur lorsque le véhicule vient à l'arrêt avec ladite détermination que le véhicule se trouve dans un trafic pare-chocs contre pare-chocs ou vient de quitter un trafic pare-chocs contre pare-chocs.
